# EUROPEAN PATENT APPLICATION

(11) **EP 1 238 600 A1**
(43) Date of publication of application: **11.09.2002**
(21) Application number: 01200868.6
(22) Date of filing: 08.03.2001
(51) Int. Cl.: A44C 27/00, C22C 9/04, C22C 19/03, C22F 1/00

(54) **NA device using shape memory alloys and a bias element to reduce the thermal hysteresis of the phase change**

(71) Applicant: Holemans, Thierry, 1440 Braine le Château (BE); Stalmans, Rudy, 3200 Aarschot (BE)
(72) Inventor: Holemans, Thierry, 1440 Braine le Château (BE); Stalmans, Rudy, 3200 Aarschot (BE)
(74) Representative: Bird, William Edward

(57) **Abstract**

With the use of shape memory elements a series of devices can be made which change shape at small changes of the environmental temperature. The devices may be composed of a shape memory element and a bias element, in such a way that the thermal hysteresis of the device becomes lower than the intrinsic thermal hysteresis of the shape memory element. The devices may be used in jewellery.

Also openable bands such as necklaces or bracelets are described.

## Description

### Field of the invention

The invention relates to devices incorporating shape memory elements, and to improvements therein, especially to the use with devices which are worn close to a living human or animal body or are located within such a body, such as jewellery, piercings or medical devices and implants.

### Background of the invention

Materials, both organic and metallic, capable or possessing shape memory and/or superelasticity are well known. An article made of materials showing shape memory can be deformed from an original, heat-stable configuration to a second, heat-unstable configuration. The article is said to have shape memory for the reason that, upon the application of the heat alone, it can be caused to revert or attempt to revert from its heat-unstable configuration to its original heat-stable configuration, i.e., it "remembers" its original shape.

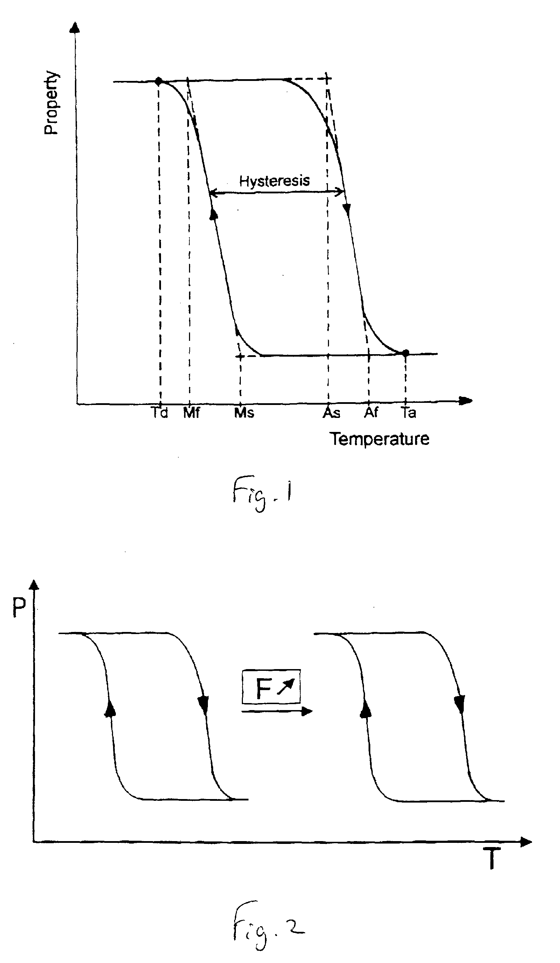

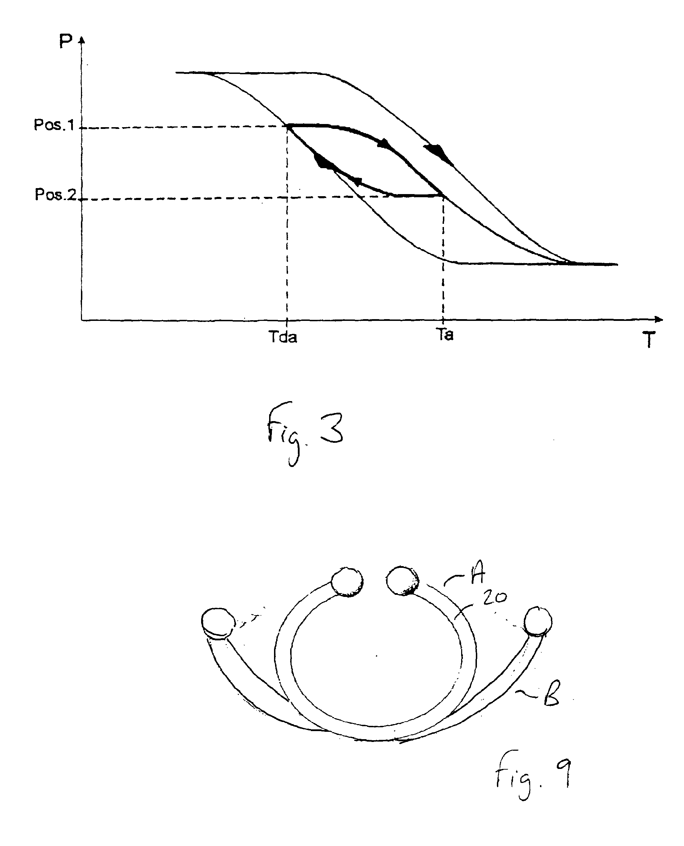

Among metallic alloys, the ability to possess shape memory is a result of the fact that the alloy undergoes a reversible transformation from an austenitic state to a martensitic state with a change of temperature. The transformation from the austenitic phase to the martensitic phase shows a temperature hysterisis, illustrated in Figure 1. It follows that the transformation cannot be characterised by a single value of temperature, but has to be characterised by four temperatures: Mₛ and M_{F}, respectively, A_{S} and A_{F} to indicate the temperatures at which the martensitic and the reverse martensitic transformation start and finish. Thus, an article made from such an alloy is easily deformed from its original configuration to a new configuration when cooled to a temperature below Mf. When an article thus deformed is warmed, the deformed object will return to its original configuration starting at As and finishing at Af. A shape memory material can be formed into a shape memory element (SME) which may be used to activate depending upon temperature.

Many shape memory alloys (SMA) are known to show also superelasticity. When an SMA sample exhibiting superelasticity is stressed at temperature above Af (so that the austenitic state is stable), but below Md (the maximum temperature at which martensitic formation can occur even under stress) it first deforms elastically and then, at a critical stress, begins to transform by the formation of stress-induced martensite. When the stress is released, the martensite becomes unstable and transforms back to austenite, with the sample returning to its original shape. Similarly, as the thermally induced transformation, the stress induced transformation shows a stress hysterisis.

Shape memory alloys can now be found in a wide range of applications and products that take advantage of the shape memory and superelastic properties. However the application of shape memory elements for actuation of devices is accompanied by several disadvantages, of which two are particularly relevant with respect to the presented invention.

Firstly, in many shape memory alloys there is a large hysteresis as the alloy is transformed between austenitic and martensitic states. Moreover, the transformation ranges, {A_{S}-A_{F}} and {M_{S}-M_{F}}, can be quite substantial. As a result, reversing of the state of an SMA element may require a temperature excursion of several tens of degrees Celsius, or a stress excursion of several hundreds of MPa. It follows that a temperature excursion of several tens of degrees (or hundreds of MPa) is required for activation and deactivation of a device incorporating shape memory elements. For example, the commercially available near equi-atomic binary nickel-titanium alloys can have a hysteresis width of about 40°C. The total transformation range {A_{F}-M_{F}} can be easily above 60°C. For example, if the activation temperature of a device to be worn such as jewellery would be close to body temperature (say 30 to 35°C), the deactivation temperature would be below -20°C, which would limit the practical use of such a device. To remove the device would require immersion of the respective body part in a salt/ice mixture, in a deep freeze or similar which is not only impractical but also not very pleasant for the wearer of jewellery.

Second, it is difficult to control the transformation temperatures of shape memory alloys with accuracy as they are usually extremely composition- and processing-sensitive. The result is that the activation and deactivation temperatures of devices incorporating SMA-elements, are difficult to control.

The combination of these factors limits the practical application of devices actuated by shape memory elements in many fields. In many cases, it is desirable that the device can be actuated in a small temperature range and that the actuation temperatures can be easily controlled or more correctly accurately set.

It would thus be desirable to develop a way for easy control of the activation and deactivation temperatures of SMA devices and for decreasing the hysteresis and the transformation ranges. This is especially relevant for devices used in or close to a mammalian body.

### Summary of the invention

In one aspect of the present invention includes a device incorporating at least one shape memory element is provided offering (i) a substantially decreased temperature range between the activation and deactivation temperature and (ii) an easy method for control of the activation and deactivation temperatures. Specific shape memory alloys show a small hysteresis and a small transformation range. By integrating SMA elements made of such low hysteresis alloys into the said devices, an improved device results. The alloys may be metal alloys.

The present invention may provide a device comprising a shape memory element and a bias element, the shape memory element and the bias element co-operating together to provide the device with an activation temperature and a deactivation temperature, wherein the difference between the activation temperature T_{A} and the deactivation temperature T_{D} is 10°C or less, preferably 7°C or less or most preferably 5°C or less. The bias element may co-operate with the shape memory element so that the stress on the shape memory element is lower in the activated state compared to the deactivated state resulting in a lowering of the thermal hysteresis of the device compared to the thermal hysteresis of the shape memory element alone. The stress may be a bending stress. The device may also comprise a blocking element so that said shape memory element has a restricted movement, resulting in a lowering of the thermal hysteresis of the device. The shape memory element and the bias element may be adapted so that the shape memory element buckles under the action of the bias element, resulting in a lowering of the hysteresis of the device. The shape memory element and the bias element may be adapted so that the bias element buckles under the action of the shape memory element, resulting in a lowering of the hysteresis of the device. The thermal hysteresis of the device may be such that when placed in a thermal gradient the device is repeatedly activated and deactivated. The device preferably exhibits a thermal hysteresis with a deactivation temperature in the range 20 to 32°C. The device may have an activation temperature in the range 25°C to 35°C. Any such devices are preferably included in a piece of jewellery such as a necklace or a bracelet or brooch.

The present invention may also provide a piece of jewellery for placing around a body part of a mammal, especially a human being having an open state for application to the body part and a closed state in which the piece of jewellery located on the body part, wherein the jewellery piece comprises a device made of a shape memory material, and in the closed state the shape memory material is activated and in the open state the shape memory material is at least partially deactivated, the shape memory element exhibiting thermal hysteresis having upper and lower temperature transformation ranges, the shape memory material having an upper temperature transformation temperature range of 10°C or less, preferably 7°C or less and more preferably 5°C or less. The shape memory element may have an upper temperature transformation start temperature A_{S} is in the range 18 to 25°C. The shape memory element may have an upper temperature transformation finish temperature A_{F} in the range 23°C to 30°C. Typically, the jewellery piece will be a necklace or a bracelet.

Accordingly, this invention provides improved devices with a very low temperature difference between the activation and deactivation temperature and with easily controllable activation and deactivation temperatures.

The invention will now be described with reference to the following drawings.

### Brief description of the drawings

Figure 1 shows a schematic illustration of a property change (such as length) versus temperature for a shape memory element. The hysteresis, the activation temperature T_{A}, the deactivation temperature T_{D} and the transformation temperatures M_{S}, M_{F}, A_{S}, A_{F} are indicated.

Figure 2 shows the effect of a bias force schematically. The property P is shown versus temperature T. By applying a higher bias force, the transformation temperatures will shift to higher temperatures.

Figure 3 shows an embodiment of the present invention - the use of partial transformation to reduce hysteresis. The movement from position 1 to position 2 and vice versa involves only a partial transformation. The difference beteen the activation temperature T_{A} and the deactivation temperature T_{D} becomes lower due to this partial transformation.

Figure 4 is an illustration of the effects of different biasing systems on the transformation ranges.

Figures 5a and b show two states of a device in accordance with an embodiment of the present invention using a snap mechanism.

Figure 5c show the hysteresis loop for the devices shown in figures 5a and b when placed close to a heat source indicating cyclic behaviour.

Figures 5d to 5i show alternative embodiments of the present invention all having a lower stress in the shape memory element in the activated state.

Figures 6a and b show two states of a device in accordance with an embodiment of the present invention not using a snap mechanism.

Figure 6c show the hysteresis loop for the devices shown in figures 5a and b when placed close to a heat source showing two semi-stable positions P1 and P2.

Figures 7a and b shwow two states of a brooch in accordance with an embodiment of the present invention.

Figures 7c and d show the two states of the activating devices for the brooch of figures 7a and b.

Figure 8a shows a necklace having moveable flowers in accordance with an embodiment of the present invention.

Figures 8b and c show the two states of the activating device for the necklace of figure 8a which activate cyclically when placed in a temperature gradient.

Figure 9 shows a bracelet in accordance with an embodiment of the present invention.

### Detailed description of the illustrative embodiments

The present invention will be described with respect to certain embodiments and drawings but the present invention is not limited thereto but only by the claims. Although, allowance is granted for the publication of this patent application all rights such as copyright or design rights especially of the jewellery shown in the drawings is maintained with reference to other third parties.

The present invention will be discussed by describing in detail the hysteresis and the transformation ranges of the shape memory element, and how the difference between the activation and deactivation temperature of the device can be lowered. In accordance with an aspect of the present invention the difference between T_{A} and T_{D} is 10°C or less, preferably 7°C or less, most preferably 5°C or less. The following methods, optionally in combination can achieve these levels. An additional advantage of the presented embodiments is that they result in a very compact design. This is of critical importance in the design of jewellery where any moving parts must be so small that they do not disturb the aesthetic appearance of the piece.

### The transformation range of a shape memory element: use of shape memory alloys with a low hysteresis.

Shape memory alloys exhibit a hysteresis between the forward and reverse transformation, as shown in Figure 1. Accordingly, devices actuated by shape memory elements, will exhibit a temperature hysteresis between a forward and reverse shape change which may be defined as a difference of temperature, e.g. at the centre or midline (horizontal) of the hysteresis curve shown in figure 1. The intrinsic hysteresis of the shape memory elements will thus be reflected in any device making use of such materials. Many applications of shape memory alloys nowadays are using near equiatomic binary nickel-titanium alloys. Such nickel-titanium alloys typically have a hysteresis width of about 40°C. Specific alloys processed properly show however a much lower hysteresis. Examples thereof are:
- Cu-based shape memory alloys, such as Cu-Zn-Al and Cu-Al-Ni, and especially single crystals hereof
- Ni-Ti-X alloys, and especially Ni-Ti-Cu-X based alloys (X being Fe, Cr and the like), and single crystals hereof
- Ni-Ti alloys and Ni-Ti-X alloys, by use of the R-phase transition in these alloys, and especially Ni-Ti-Fe alloys
- Au based shape memory alloys, and single crystals hereof

By integrating elements of such low hysteresis alloys into devices, these devices will also show a much lower hysteresis.

Another important point is that the upper and lower transformation ranges of the hysteresis curve, {As-Af} and {Ms-Mf}, can be quite substantial. Figure 1 shows that in order to switch from the 'on' state at the activation temperature Ta to the 'off' state at the deactivation temperature Td and vice versa, the hysteresis and the two transformation ranges have to be overcome. Large transformation temperature ranges result in a slow/sluggish action of such devices.

Accordingly, in order to minimise the difference between the activation and deactivation temperature, the transformation ranges should also be minimised. These transformation ranges can be minimised, for example, in one aspect by proper alloy selection and proper processing. This minimisation can be done based on the knowledge of the skilled person. Thus, by selecting elements of shape memory alloys with low hysteresis and/or small transformation ranges, a device will be obtained in which the difference between the activation and deactivation temperature will be lower. However, setting the exact activation temperatures still remains a problem.

### Adjusting the transformation temperatures and decreased hysteresis by using a bias element

The transformation temperatures of shape memory alloys are composition and processing dependent. It follows that the transformation temperatures can be controlled to some extent by controlling the composition and the processing. However, it is difficult to control the transformation temperatures of shape memory alloys in this way with sufficient accuracy.

In most devices actuated by shape memory elements, the shape memory elements work against a bias element. The SMA element therefore generates force and motion, and thus work, on heating. The simplest mode of operation is an SMA wire acting against a constant force. It is known that the transformation temperatures will increase when the bias force is increased, as schematically illustrated in Figure 2. It follows immediately that by proper selection of the bias element, and/or installing an adjustable bias element, the activation and deactivation temperature of the device can be further adjusted.

An accurate control of the transformation temperatures in accordance with embodiments of the present invention is thus obtained by a proper selection of composition and processing of the shape memory element, with a final adjustment via a proper selection of the bias element and/or installing an adjustable bias element, e.g. a bias element such as a compression spring and a screw for adjusting the initial bias of the spring. It has been found that the hysteresis (in °C difference) in a biased system will in general be lower than in a stress-free shape memory element. Application of a bias element can thus be used also for lowering the hysteresis of the device.

### Reducing the hysteresis and reducing the transformation ranges by use of a partial transformation

In a first approximation, the hysteresis (in °C difference) is proportional to the amount of involved transformation. A cyclic partial transformation will thus show a smaller hysteresis and a partial transformation range, as illustrated in Figure
3. The difference between T_{D} and T_{A} is also reduced. A partial transformation can be imposed basically in two ways.

1. The device can be designed in such a way that a further shape change is impeded during heating and/or during cooling by a blocking element. Accordingly, the difference between activation and deactivation temperature will be lowered.
2. The external conditions can also cause a partial transformation. For example, a shape memory element can be put onto or into or onto a warm object, e.g. the mammalian body. In case heating, respectively cooling is used, body temperature will be the minimum, respectively maximum temperature of the SMA element. In case body temperature is located between M_{S} and M_{F}, respectively A_{S} and A_{F}, a partial transformation will be obtained involving a smaller difference between activation and deactivation temperatures.

### Reduced transformation range by applying a decreasing bias stress

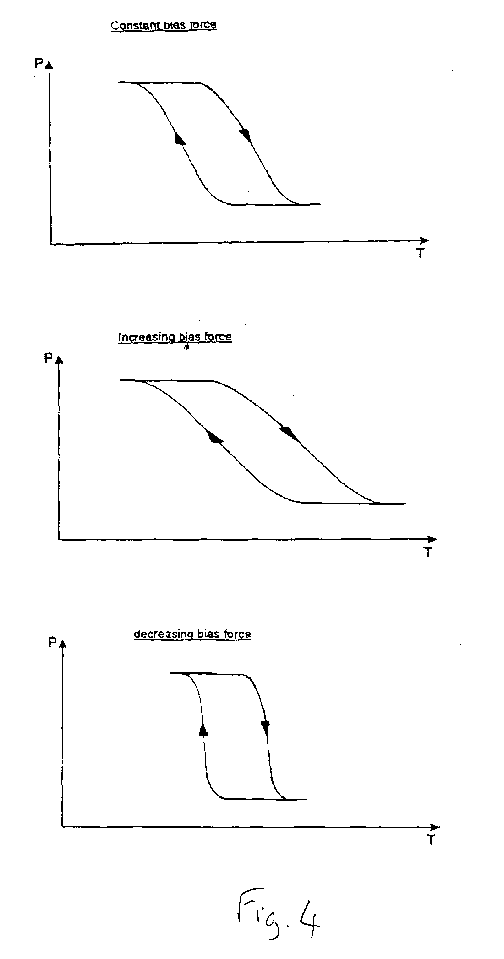

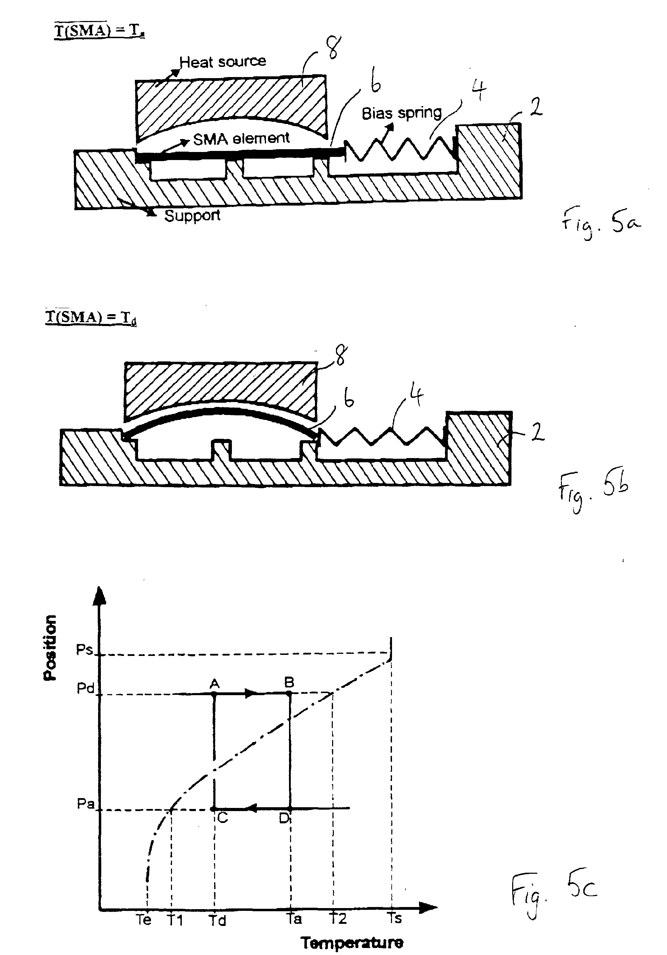

In most devices incorporating SMA-elements, the bias element exerts (i) constant or (ii) increasing bias stresses on the SMA element as the SME element is activated, as illustrated in Figure 4. In the case of a constant bias, the transformation temperature ranges {A_{F}-A_{S}} and {M_{S}-M_{F}} will nearly not be affected. In the second case, the transformation range increases. Accordingly, the temperature difference between activation temperature and deactivation temperature also increases.

In accordance with an embodiment of the present invention, bias systems are provided in which the bias element co-operates with shape memory element so that there is a decreased biasing stress on the SMA-element at a higher temperature. In such cases, transformation temperature ranges {A_{F}-A_{S}} and {M_{S}-M_{F}} will decrease. Accordingly, the temperature difference between activation temperature T_{A} and the deactivation temperature T_{D} also decreases. The reduction in the transformation ranges results in an activation action which is closer to a "snap-action" as well as reducing the temperature change required to change states of the SME.

### Reduction of the transformation range by buckling : snap-action mechanisms

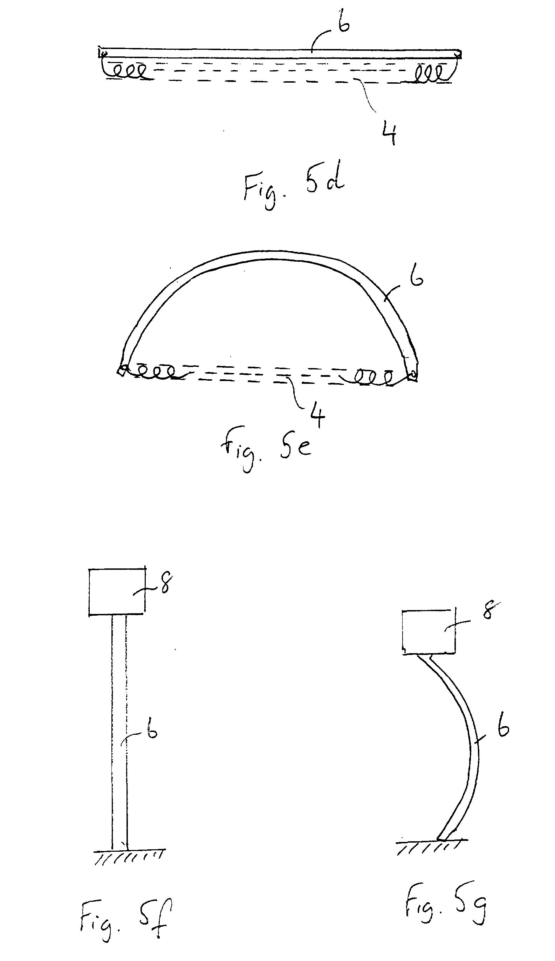

A further embodiment of the present invention includes devices in which one of the biasing element and the SMA element will buckle during cooling and will 'reverse-buckle' during heating. The shape change of the SMA-element during cooling will occur nearly at constant temperature (the deactivation temperature) and the reverse shape change during heating will also occur nearly at a constant temperature (the activation temperature), as shown in figure 5c when referring to devices schematically shown in figures 5a and b for the example of a shape memory plate which is compressed by a bias element which may be a pre-biased compression spring. The stable state of the SME is a flat plate as shown in Figure 5a. A support 2 is provided to which is attached a compression biasing element 4 such as a spring which acts on a coplanar elongate SME 6. Above the activation temperature, this elongate SME 6 such as a plate or rod will be straight. During cooling, because of the compressive stresses applied by the biasing element 4 the straight shape will become unstable due to weakening of the SME 6. Hence, at a critical temperature the SME 6 will buckle to a curved shape as shown in figure 5b. During subsequent heating, the reverse will occur at a higher temperature and the curved SME 6 gains mechanical strength and 'reverse- buckles' to the original straight shape. In summary, because of this snap-action mechanism both transformation ranges are reduced to nearly a constant single temperature - as indicated in figure 5c.

Included within the present invention are also ways to enhance or adjust the buckling effect. For example, for the case of the elongate SMA-element 6 (e.g. plate or rod shaped), the buckling can be enhanced and adjusted by weakening, e.g. thinning the middle part of the SME 6. The application of this snap-action mechanism to devices incorporating SMA elements is not limited to the presented example, but can be applied in many different devices and the involved SMA-elements are not limited to plate- or rod-shaped SMA-elements.

Various designs of biasing elements are shown in figures 5d to i. In figure 5d a biasing element 4 e.g. of a tension spring is shown attached to both ends of an elongate SME 6. The tension spring exerts a compressive force on the SME 6 causing it to buckle below the critical temperature as shown in figure 5e. In figure 5f a weight 8 is placed on the elongate SME 6 as a biasing element. As shown in figure 5g the SME 6 buckles below the critical temperature. Despite the fact the force exerted by the weight 8 is constant, the bending moment (and therefore stress) on the SME 6 at its centre is larger at the lower temperature.

Instead of the SME buckling, additional useful effects can be produced by the biasing element being made to buckle or lower its biasing force. An embodiment is shown in figures 5h and i. The biasing element 4 is a spring strip which is buckled when the elongate SME 6 (e.g. rod, strip or plate) is in the activated state (high temperature, stiff properties) as shown in figure 5h. As the temperature drops the SME 6 becomes weaker and buckles as shown in figure 5i. By attaching mechanical linkages to the SME 6 and the bias element 4, movements can be actuated in both the activated and deactivated states. This results in a double action switch which is very compact and efficient. Where a heat source 8 is provided close to the SME 6, a cyclic action can be achieved (see below).

The snap-action mechanism may be also used in so-called on-off actuators.

### Action of the device in a temperature gradient: a device acting/reacting at constant thermal conditions

Embodiments of the present invention include devices in which the SMA element moves in the opposite direction to a decreasing thermal gradient, i.e. it moves towards a heat source whose temperature is higher than the environment. There is a temperature gradient in which the temperature drops with increasing distance from the heat source. The behaviour of the device is especially relevant in combination with the above presented snap-action mechanism. The embodiment of figure 5, placed close to a heat source 8, as illustrated in figures 5 a and b shows this behaviour. In the deactivated state, the elongate SME 6 is curved (figure 5b) and is close to the heat source 8. As a result of heat transfer from the heat source 8 the temperature of the SME 6 will increase. At the critical activation temperature, the SME 6 will 'buckle back' and moves away from the heat source 8 (figure 5a). Due to the temperature gradient, the SME 6 will now start to cool. At the critical deactivation temperature, the SME 6 will buckle again. This cyclic movement (ABDC of figure 5c, temperature changes caused by the gradient experienced by the SME is shown as the curve Te) will be repeated as long as the temperature gradient exists. The periodic time of the cycle will depend on the thermal gradient, but can also be controlled via the design of the device and the selection and processing of the shape memory elements, as explained above, as well as the thermal mass of the complete device. Evidently, in case the thermal gradient is relatively small, shape memory elements with a very low hysteresis will have to be selected, optionally in combination with the methods presented above for a further lowering of the hysteresis and of the transformation ranges.

As figures 6a to c show, the snap-action mechanism (small transformation ranges) is preferable in order to obtain a sharp and definite cyclic movement of the device in a thermal gradient. In figure 6a and b a shape memory element 6 is constrained within cavity in a block support 2, the block 2 having a groove 3 near its upper surface into which the SME 6 fits. The SME 6 is biased by a biasing device 4 such as a compression spring acting perpendicularly to the SME 6 at its centre. The transformation ranges are larger than in figure 5c (no snap action). In this situation the SME 6 may find one of two semi-stable positions: either the position of SME 6 determined by position B of the hysterisis loop (position P2 in a bent position). Otherwise the SME 6 takes a position determined by D on the hysteresis loop (position P1). Note that the force exerted by the spring 4 is lower in the deactivated state (low temperature state) and the bending stress in the SME 6 is lower despite the large amount of bend. Such a device can make a movement to one of the two semi-stable positions depending upon whether device starts at position C or A. When the environmental conditions change again the device can take on the other semi-stable position. The device is a mechanical bi-stable flip-flop or switch.

### Brooch reacting on small changes of the environmental temperature

Conventional brooches have a fixed shape. In accordance with the present embodiment a brooch is provided with thermally activated moving parts. These parts should move when there are changes of the local temperature. An example is that the brooch is positioned on a dress but below a coat (or the like). In that case, the temperature of the brooch will be relatively close to body temperature. When the coat is removed, the local temperature at the brooch will decrease to a temperature closer to room temperature - this will result in activation of the moving parts of the brooch, either closing or opening.

Other sources of such small temperature changes can also be used. For example, when the person is walking around the local temperature will be closer to room temperature than when the person is sitting quietly on a chair. Another example is that the person goes from a warmer room to a colder place and vice versa or if the temperature of the room itself changes.

The moving parts of the brooch should react on small temperature differences. As an embodiment of the present invention, a brooch 12 has a decorative design, e.g. the shape of a peacock 14 with moving feathers 16 as shown in figures 7a and b. These feathers 16 are actuated by a device in accordance with an embodiment of the present invention - a combination of a bias element 4 such as a bent wire acting against small elongate, e.g. beam-shaped, shape memory element 6 as shown schematically in figures 7c and d. The brooch 12 is a mechanical bi-stable flip-flop device similar, in principle, but not in detail, to that shown in figure 6. As shown in figure 7c, the wire spring 4 is bent and exerts a large bending moment on the shape memory element 6 when the temperature is high (activated state of the shape memory element). The SME 6 is mounted on a support 2. In this state the shape memory element 6 is very stiff and is almost straight. As the temperature is reduced the shape memory element 6 becomes weak and bends easily (figure 7d). This movement is used to move one of the feathers 16 by a linkage 7. To limit the movement (partial transformation) a blocking element 9 is used which is forced against a stop 11 which may be part of support 2.

This embodiment makes use of the following features to obtain a difference of T_{A} - T_{D} of 10°C or less, more preferably 7°C or less or most preferably 5°C or less:
Use of a shape memory element with a very low hysteresis.
- Cu-Zn-Al single crystals were obtained from 'Centro Atomico Bariloche' (Av. Bustillo 9,500; 8400 San Carlos de Bariloche, Argentina, contact person: Marcos Sade). Small beam shaped elements were cut from these Cu-Zn-Al single crystals. Appropriate heat treatments were carried out, e.g. 825°C for 30 minutes followed by 120°C for 50 minutes).
- Adjusting the transformation range by applying a bias stress. This is achieved by selecting the pre-biasing of the spring. By adjusting the initial bias strain, the activation and deactivation temperature can be shifted to appropriate values.
- Reducing the hysteresis and the transformation ranges by use of a partial transformation. The shape change of the shape memory plates is limited since the wing movement only allows a limited displacement. For this purpose the movement is limited by a blocking element. By adjusting the size of the displacement, and by adjusting the dimensions and the exact positioning of the shape memory beams, the degree of partial transformation can be controlled. Optionally, a snap mechanism can be built into this devices.

### Necklace actuator moving cyclically in a small temperature gradient

An embodiment of the present invention provides a necklace as shown schematically in figure 8a containing at least one flower 18 whose petals 19 should be opened and closed by a mechanism. In this embodiment the flower 18 opens and closes repeatedly, in a cyclic manner, due to a slight thermal gradient close to the human body of the wearer of the necklace even when the global room temperature is constant. The biasing element is one or more tension springs 4 in parallel with the elongate shape memory element 6 as shown in figures 8b and c. The SME 6 is mounted on a support 2. In the activated state (high temperature state), the shape memory material is stiff and the SME 6 is straight. The bending stress on the shape memory element 6 is small (figure 8b) as the tension spring 4 is hardly offset from the shape memory element 6. In this state the SME 6 is furthest away from the human body or other heat source 8. As the temperature drops, the shape memory material weakens and it bends resulting in a high bending stress at the lower temperature (Fig. 8c). This movement opens and closes the petals 19 of the flowers 18. The SME 6 moves closer to the heat source 8 and begins to warm again thus resulting in a cyclic action. A blocking element 9 may be used which interferes with a stop 9 (e.g. part of support 2) to restrict the movement and thus reduce the hysteresis.

In this embodiment, the following features of the present invention have been integrated in the device to obtain a difference of T_{A} - T_{D} of 10°C or less, more preferably 7°C or less or most preferably 5°C or less:
- Use of a shape memory element with a very low hysteresis. Cu-Zn-Al single crystals were obtained from 'Centro Atomico Bariloche' (Av. Bustillo 9,500; 8400 San Carlos de Bariloche, Argentina, contact person: Marcos Sade). Plate shaped elements were cut from these Cu-Zn-Al single crystals. Appropriate heat treatments have been given afterwards (825°C for 30 minutes followed by 120°C for 50 minutes).
- Reduced transformation range by applying a decreasing bias stress. The bias element is placed in such a way that the bias stresses decreases as the SME element becomes activated (comparable to the design presented in figures 5a and b). This results in a smaller difference between activation and deactivation temperature. By adjusting the initial bias strain, the activation and deactivation temperature can be shifted to appropriate values.
- Reducing the hysteresis and the transformation ranges by use of a partial transformation. The shape change of the shape memory plates is limited since the petal movement is restricted to a limited displacement. By adjusting the size of the displacement, e.g. by appropriate blocking or restraining elements, and by adjusting the dimensions and the exact positioning of the shape memory plate, the degree of partial transformation can be controlled.
- Snap mechanism in combination with a temperature gradient. The shape memory plate is shaped in such a way (preferably with some thinning in the middle) and the bias springs are placed appropriately (comparable to the design presented in figures 5a and b) in order to obtain the snap mechanism. The device is placed in such a way that the shape memory plate is positioned close to the body in order to use the temperature gradient from body temperature to room temperature. Buckling (as a result of cooling) will result in a movement of the shape memory elements towards the body. Thus, the shape memory plate comes closer to the body and the temperature of the shape memory element will increase due to the body heat. At the critical activation temperature, the shape memory plate will 'buckle back' and move away from the body and thus to an environment at lower temperatures. Accordingly, the temperature of the shape memory plate will decrease. At the critical deactivation temperature, the shape memory plate will buckle and move towards the body and thus to an environment at higher temperatures. This sequence of 'buckling back' and buckling will continue.

### Further Embodiments of the present invention

The features of the present invention described above can be used to provide opening and closing actuators for many medical applications. Repeated actuation can be achieved using very small temperature differences, e.g. body heat, as well as providing a snap actuation. These features provide:
- Actuator which reacts on very small temperature differences
- Actuator which acts/reacts repeatedly at a constant environmental temperature, by using local temperature differences, e.g. close to the body
- Actuator which acts/reacts repeatedly at a constant environmental temperature, by using local temperature differences, e.g. close to the body, in combination with an integrated snap-mechanism.

### Ornamental bands

Embodiments of the present invention include bands such as bracelets and necklaces to be worn by mammals such as dogs or humans. These bands can be opened to place around the respective body part when subjected to a low temperature and then close when they are heated by the body warmth of the mammal.

The opening and closing mechanism can be applied also for any band-like product (inclusive medical applications) of which the following is non-exhaustive list: bracelets, rings (inclusive earrings, piercings, medical implants, etc), necklaces, couplings (industrial, medical), sealing and closing mechanisms, etc.

Such bands should ideally have the following features
- the band (which might be integrated in another element) may be fitted nicely around or inside an *object*, without any hinges, locks, screws and the like.
- the band will close or expand at high temperatures and can be opened or shrunk at lower temperatures.
- the band's shape changes with temperature differences.

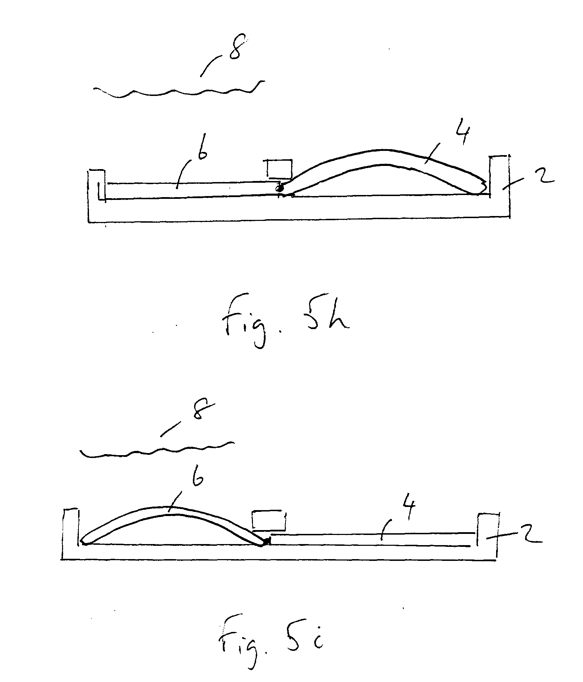

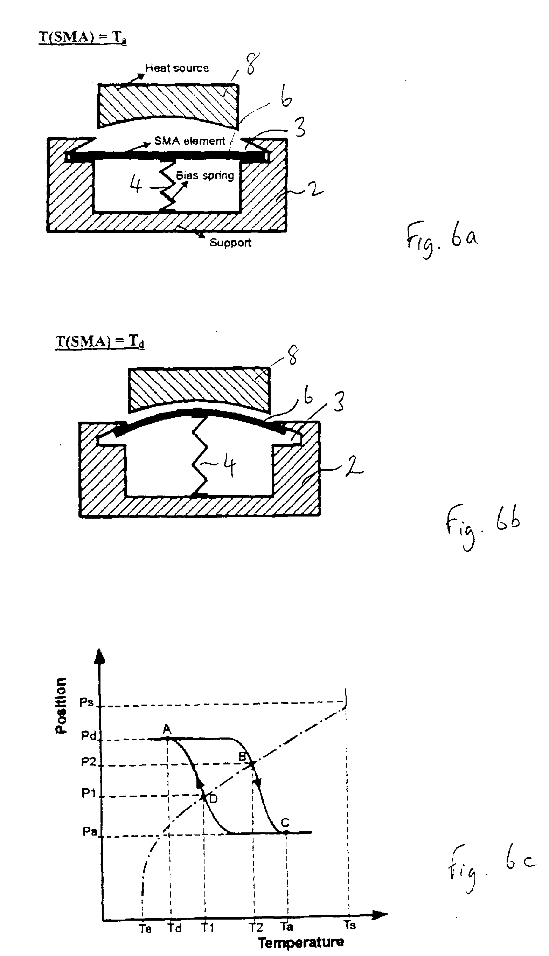

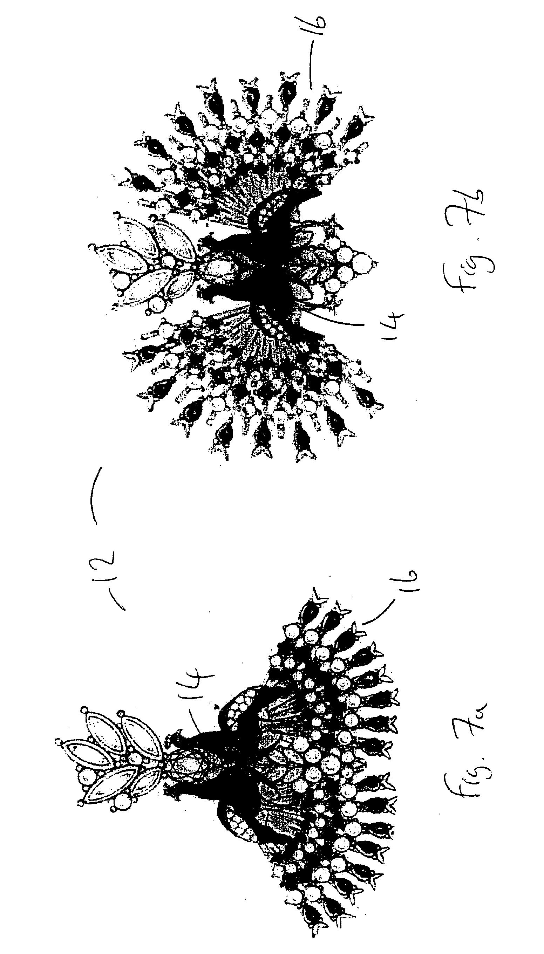

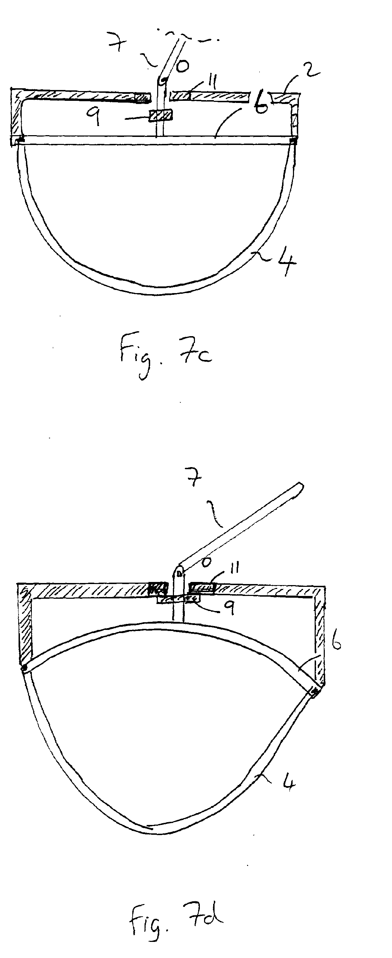

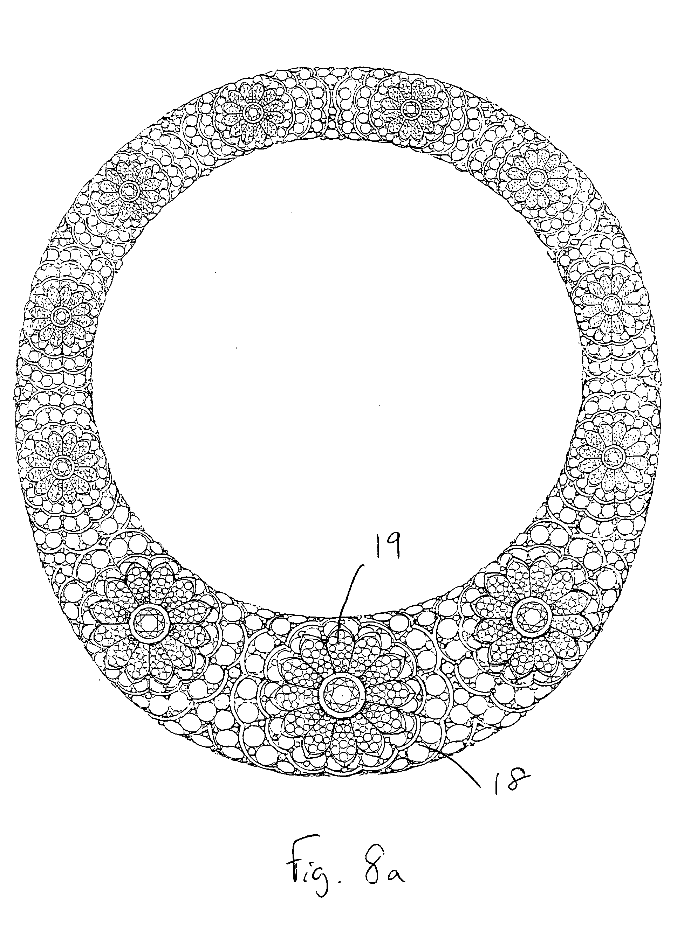

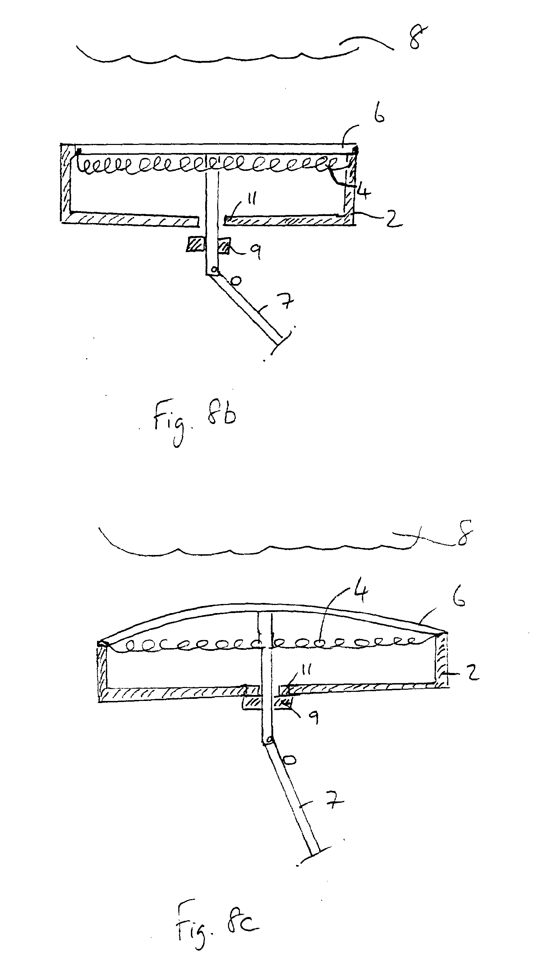

In accordance with embodiments of the present invention a band 20 is made of shape memory material having a shape set in order to have a 'hot' shape A which fits around an object (e.g. an arm bracelet as shown in Fig. 9). At a lower temperature, the band 20 can be deformed (e.g. by hand) to a 'cold' shape B with a more open structure (e.g. a larger diameter). By heating the band 20, the band 20 will move from the cold shape to the hot shape automatically. This process can be repeated as often as desired. The starting shape memory material can have a wire shape, strip shape and the like.
A typical example is a bracelet made of shape memory wires. After shape setting, the hot shape A will be an elliptical shape made in such a way that a nice fit around the arm or wrist is obtained. At lower temperatures (e.g. by immersing into cold water, ice water, by putting it in a freezer, etc) the bracelet can be deformed (e.g. manually) to an open position having shape B. In this open position, the bracelet can be put easily on the wrist or arm. Due to the body heat, the temperature of the bracelet will increase and the bracelet will revert to its hot shape. When it has obtained the hot shape, the bracelet fits nicely around the wrist or arm. The preferred way of removing the bracelet, is the following. The bracelet should first be cooled to a sufficiently low temperature, e.g. by running cold water on the bracelet. After sufficient cooling, the bracelet can be easily opened and removed.

The shape memory alloy and the processing of the shape memory wire is performed in order to have the transformation temperatures A_{S}, A_{F}, M_{S} and M_{F}, in the necessary range (see below). For the example of the bracelet, the following is considered as ideal.
1. The ideal solution is that the bracelet can be opened at lower temperatures, and keeps the open shape at temperatures at or slightly above room temperature. In this way the bracelet with the open shape can be stored and transported easily. The technical corresponding request is that A_{S} and A_{F} should be sufficiently high.
2. The larger the temperature difference between body temperature and A_{F}, the faster will be the shape change from the cold shape to the hot shape. A sufficiently fast action is required for practical and aesthetic reasons. It follows that A_{F} has to be sufficiently below body temperature.
3. For practical reasons, it should be possible to open the bracelet at sufficiently high temperatures. It follows that A_{S} should be sufficiently high.
4. Combining the requests above, it also follows that a small temperature range for the reverse transformation is preferred, as well for aesthetic reasons and for practical reasons.
5. As an example, an As close to 22°C (between 18°C and 25°C) and an A_{F} close to 28°C (between 23°C and 30°C) is preferred.
6. The difference between A_{F} and A_{S} is preferably 10°C or less, more preferably 7°C or less and most preferably 5°C or less. The reason for this is that such a bracelet can be opened at some °C below A_{S}. Hence, A_{S} should not be too low otherwise a low temperature will have to be applied which may be inconvenient for the wearer.

The shape memory element can be made of many shape memory materials. Some examples:
- binary Nickel Titanium (abbreviated to Ni-Ti)
- Nickel Titanium with other alloying elements
- Nickel Titanium Copper with other alloying elements
- Nickel Titanium Copper Chromium
- Cu based shape memory alloys, such as CuZnAl and CuAlNi with further alloying elements
- Au based shape memory alloys

The transformation temperatures of most shape memory alloys are composition and processing dependent. In order to obtain the appropriate transformation temperatures, alloys of appropriate composition and which underwent appropriate processing have to be selected. This can be done by persons skilled in the art.

### Production of the bands

The starting material is wire, strip and the like with correct dimensions and made of appropriate alloys which have undergone appropriate processing (see above). The further production of the bands can involve several steps, such as (i) shape setting treatments, (ii) extra heat treatments, (iii) polishing and colouring processes, and (iv) adding other objects. The sequence given here is only indicative; other sequences can be followed. All the processes and procedures can be done by persons experienced in developing and making of products of shape memory alloys.

### Shape setting treatment

In this step, the hot shape is given to the shape memory element. It typically involves (i) the production of a mandrel with the appropriate shape, (ii) fixing the shape memory element on or around the mandrel, (iii) putting the mandrel with the fixed shape memory element in a furnace or the like (molten salt bath or similar) for appropriate times and at appropriate temperatures, and (iv) cooling and removing the shape memory element from the mandrel. Afterwards, the shape memory element will have the required hot shape. Taking the example of Ni-Ti based elements, the heat treatment temperature and time will be typically 400-550°C for 2 to 30 minutes, although other procedures can be followed.

### Additional heat treatments

Additional heat treatments might be required to shift the transformation temperatures or to change the ductility of the shape memory elements.

### Polishing and colouring

For aesthetic reasons, polishing and colouring treatments might be required. Grinding and polishing (electropolishing or mechanical polishing) will give a metal colour. For the case of Ni-Ti based elements, yellow, blue, black and intermediate surface colours can be obtained by appropriate heat treatment. Different colours can be also obtained via coatings and paints.

### Adding other objects

Other objects can be connected to the shape memory elements. For example for the case of the bracelet, diamonds, golden balls and the like can be put on the shape memory element for aesthetic reasons.

While the invention has been shown and described with reference to preferred embodiments, it will be understood by those skilled in the art that various changes or modifications in form and detail may be made without departing from the scope and spirit of this invention.

## Claims

1. A device comprising a shape memory element and a bias element, the shape memory element and the bias element co-operating together to provide the device with a thermal hysteresis having a mechanical property activation temperature and a mechanical property deactivation temperature, wherein the difference between the activation temperature T_{A} and the deactivation temperature T_{D} is 10°C or less, preferably 7°C or less or most preferably 5°C or less.

2. The device according to claim 1, wherein the bias element co-operates with the shape memory element so that the stress on the shape memory element is lower in the activated state compared to the deactivated state resulting in a lowering of the thermal hysteresis of the device compared to the thermal hysteresis of the shape memory element alone.

3. The device according to claim 2 wherein the stress is a bending stress.

4. A device according to any of the previous claims, further comprising a blocking element so that said shape memory element has a restricted movement, resulting in a lowering of the thermal hysteresis of the device.

5. A device according to any previous claim, wherein said shape memory element and the bias element are adapted so that the shape memory element buckles under the action of the bias element, resulting in a lowering of the hysteresis of the device.

6. A device according to any of claims 1 to 4, wherein said shape memory element and the bias element are adapted so that the bias element buckles under the action of the shape memory element.

7. A device according to any previous claim, wherein the thermal hysteresis of the device is such that when placed in a thermal gradient the device is repeatedly activated and deactivated.

8. A device according to any previous claim wherein the device exhibits thermal hysteresis with a deactivation temperature in the range 20 to 32°C.

9. A device according to any previous claim, wherein the device exhibits thermal hysteresis and has an activation temperature in the range 25°C to 35°C.

10. A piece of jewellery comprising at least one device according to any of claims 1 to 9.

11. A piece of jewellery for placing around a body part of a mammal, especially a human being, the jewellery piece having an open state for application to the body part and a second state in which the piece of jewellery is trapped on the body part, wherein the jewellery piece comprises a device made of a shape memory material, and in the second state the shape memory material is activated and in the open state the shape memory material is at least partially deactivated, the shape memory element exhibiting thermal hysteresis having upper and lower temperature transformation ranges, the shape memory material having an upper transformation temperature range of 10°C or less, preferably 7°C or less and more preferably 5°C or less.

12. The jewellery piece according to claim 11,wherein the shape memory element has an upper transformation start temperature A_{S} is in the range 18 to 25°C.

13. The jewellery piece according to claim 11 or 12, wherein the shape memory element has an upper transformation finish temperature A_{F} in the range 23°C to 30°C.

14. The jewellery piece according to any of the claims 10 to 13, wherein the jewellery piece is a bracelet or a necklace.
